# EUROPÄISCHE PATENTANMELDUNG

(11) **EP 2 722 949 A1**
(43) Veröffentlichungstag der Anmeldung: **23.04.2014**
(21) Anmeldenummer: 12189012.3
(22) Anmeldetag: 18.10.2012
(51) Int. Cl.: H02G 1/12, G01R 27/26, H01R 43/28

(54) **Leiterdetektion bei einem Kabelabisolierprozess**

(71) Anmelder: Komax Holding AG, 6036 Dierikon (CH)
(72) Erfinder: Zemp, Benno, 6274 Eschenbach (CH)
(74) Vertreter: Blöchle, Hans

(57) **Zusammenfassung**

Während dem Abisolieren eines Elektrokables (3) in einer Abisoliervorrichtung (1) einer Kabelbearbeitungsanlage wird eine Berührung eines Leiters (2) durch ein elektrisch leitfähiges Messer (6, 6') mit einer Sensorschaltung (4) detektiert. Durch die Verbindung der Sensorschaltung (4) mit dem Messer (6, 6') bildet sich eine Messkapazität (8) aus. Vor dem Einschneiden in das Elektrokabel (3), wird ein erster Kapazitätswerts (C8) der Messkapazität (8) während eines ersten Messzykluses, in dem ein Ladungsausgleich zwischen der Messkapazität (8) und einer Referenzkapazität (C14) durchgeführt wird, bestimmt. In einem weiteren Messzyklus wird ein Parameter bestimmt, in dem erneut ein Ladungsausgleich zwischen der Messkapazität (8) und der Referenzkapazität (C14) durchgeführt wird, wobei der Parameter bezogen auf den ersten Kapazitätswert (C8) eine Änderung eines Kapazitätswerts der Messkapazität nach dem Einschneiden in das Elektrokabel anzeigt. Ein Signal (S) wird erzeugt, wenn die Änderung grösser als ein festgelegter Schwellenwert ist, wobei das Signal (S) eine Berührung des Leiters (2) anzeigt.

## Beschreibung

Die hier beschriebenen Ausführungsbeispiele betreffen allgemein eine Anlage zum Bearbeiten von Elektrokabeln. Diese Ausführungsbeispiele betreffen insbesondere das Abisolieren eines Elektrokabels.

Ein bekanntes Elektrokabel hat einen elektrisch leitenden (Innen) Leiter und eine Isolierhülle aus Kunststoff, die den Leiter entlang seiner Länge umschliesst und elektrisch isoliert. Der Leiter kann ein Draht oder eine Litze sein. Um das Elektrokabel mit anderen elektrischen Komponenten (z.B. Stecker, Klemmen) zu verbinden, kann ein Teil der Isolierhülle an einem Kabelende entfernt werden, damit der blosse Leiter frei liegt. Der Vorgang des Entfernens der Isolierhülle wird auch als Abisolieren bezeichnet.

Das industrielle Abisolieren von Elektrokabeln erfolgt üblicherweise in einer speziell dafür vorgesehenen Kabelbearbeitungsanlage, in der ein Messer einer Abisoliervorrichtung zuerst im Bereich eines Kabelendes durch die Isolierhülle schneidet und dann das abzutrennende Stück der Isolierhülle vom Leiter zieht. Während des Abisolierprozesses sollte nach Möglichkeit der Leiter des Elektrokabels vom Messer nicht berührt bzw. beschädigt werden.

Aufgrund von stetig steigenden Qualitätsanforderungen beim maschinell durchgeführten Abisolierprozess besteht die Notwendigkeit, diesen Abisolierprozess zu überwachen. Dabei soll zuverlässig detektiert werden, ob ein Leiter eines solchen Elektrokabels bei diesem Abisolierprozess beschädigt wird. Eine Beschädigung kann darin bestehen, dass der Leiter mit dem Messer eingeschnitten oder gar durchtrennt wurde.

DE-A-102007053825 zeigt eine Abisoliervorrichtung für Elektrokabel, die eine kapazitive Sensoreinheit und ein elektrisch leitfähiges Messer hat. Die kapazitive Sensoreinheit ist mit dem Messer verbunden und derart ausgebildet, dass eine Berührung des leitfähigen Messers mit einem Leiter des Kabels anhand einer Kapazitätserhöhung detektiert werden kann. Die Sensoreinheit hat einen Wechselspannungsgenerator, der ein Sinussignal erzeugt. Ein Innenwiderstand des Wechselspannungsgenerators bildet mit der gemessenen Kapazität einen Spannungsteiler, so dass die Sensoreinheit eine Leiterberührung anhand einer Verringerung der Spannungsamplitude des Sinussignals detektieren kann. Eine solche Abisoliervorrichtung hat den Nachteil, dass eine Berührungsdetektion auf Basis des Sinussignals nur langsam erfolgen kann.

Eine Aufgabe der Erfindung ist es daher, eine verbesserte Technologie zum Abisolieren eines Elektrokabels bereitzustellen, die eine schnellere Detektion einer Berührung des Messers mit dem Leiter ermöglicht.

Ein Aspekt betrifft daher ein Verfahren zum Detektieren einer Berührung eines Leiters eines Elektrokabels durch ein elektrisch leitfähiges Messer während eines Abisolierprozesses in einer Abisoliervorrichtung einer Kabelbearbeitungsanlage, wobei eine Sensorschaltung über einen Anschluss mit dem Messer verbunden ist, so dass sich eine Messkapazität ausbildet. Das Verfahren umfasst, ein Bestimmen eines ersten Kapazitätswerts der Messkapazität während eines ersten Messzykluses, in dem ein Ladungsausgleich zwischen der Messkapazität und einer Referenzkapazität durchgeführt wird, wobei der erste Kapazitätswert vor einem Einschneiden in das Elektrokabel bestimmt wird. Das Verfahren umfasst zudem ein Bestimmen eines Parameters in einem weiteren Messzyklus, in dem erneut ein Ladungsausgleich zwischen der Messkapazität und der Referenzkapazität durchgeführt wird, wobei der Parameter bezogen auf den ersten Kapazitätswert eine Änderung eines Kapazitätswerts der Messkapazität nach dem Einschneiden in das Elektrokabel anzeigt. Das Verfahren umfasst ausserdem ein Erzeugen eines Signals, wenn die Änderung grösser als ein festgelegter Schwellenwert ist, wobei das Signal eine Berührung des Leiters anzeigt.

Ein weiterer Aspekt betrifft eine Kabelbearbeitungsvorrichtung mit einer Abisoliervorrichtung zur Ausführung des genannten Verfahrens.

Die hier beschriebene verbesserte Technologie zum Abisolieren eines Elektrokabels basiert auf einem Ladungsausgleich, der zwischen elektrischen Komponenten erfolgt, wenn diese miteinander verbunden werden. In einer Ausgestaltung wird bei dieser Methode anfangs eine unbekannte Kapazität entladen, und eine bekannte Kapazität wird geladen, so dass an ihr eine definierte Spannung anliegt. Danach werden die bekannte und unbekannte Kapazität parallel geschaltet, so dass ein Ladungsausgleich stattfinden kann. Nach dem Ladungsausgleich liegt an der Parallelschaltung aus bekannter und unbekannter Kapazität eine geringere Spannung als vorher an, die gemessen wird. Die definierte Spannung und die gemessene Spannung werden dazu verwendet, um eine Berührung eines Messers mit dem Leiter oder eine unmittelbare Nähe des Messers zum Leiter festzustellen. Das Feststellen einer Berührung erfolgt z.B. mittels der Berechnung eines Werts der unbekannten Kapazität. Werden die Messzyklen wiederholt, kann damit festgestellt werden, wenn sich dieser Wert ändert und somit auf eine Leiterberührung hindeutet.

In einem Ausführungsbeispiel kann festgelegt werden, wie viele weitere Messzyklen während dem Abisolierprozess durchgeführt werden. Da in jedem dieser Messzyklen eine Aussage über den Wert der Messkapazität getroffen wird, kann eine grosse Auflösung entlang des abisolierten Leiters erreicht werden, wenn eine hohe Anzahl von weiteren Messzyklen festgelegt wird.

In den hier beschriebenen Ausführungsbeispielen ist der erste Kapazitätswert, der im ersten Messzyklus bestimmt wird, ein Mass dafür, um in weiteren Messzyklen Aussagen darüber zu treffen, ob sich der Kapazitätswert der Messkapazität gegenüber dem ersten Kapazitätswert verändert hat, z.B. weil ein Messer den Leiter berührt hat. Der erste Kapazitätswert wird vor jedem Abisolierprozess neu bestimmt.

In einem Ausführungsbeispiel umfasst der erste Messzyklus ein Herstellen eines definierten Spannungszustandes an der Messkapazität und ein Laden der Referenzkapazität, so dass an der Kapazitätsschaltung eine erste Spannung mit einem ersten Spannungswert anliegt. Danach wird eine elektrische Verbindung zwischen der Messkapazität und der Referenzkapazität hergestellt, um einen Ladungsausgleich zwischen der Messkapazität und der Referenzkapazität zu ermöglichen. Eine zweite Spannung, die nach dem Ladungsausgleich an der Referenzkapazität anliegt und die einen zweiten Spannungswert hat, wird gemessen, und der erste Kapazitätswert der Messkapazität wird mittels der Spannungswerte und der Referenzkapazität bestimmt.

Das Herstellen des definierten Spannungszustandes kann auf unterschiedliche Weise geschehen. In einem Fall kann die Messkapazität kurzgeschlossen werden, und in einem weiteren Fall kann eines definiertes Spannungspotentials an die Messkapazität gekoppelt werden. Damit wird ist die hier beschriebene Technologie flexibel an verschiedene Gegebenheiten bzgl. des Bezugspotential der Kabelbearbeitungsanlage anpassbar.

Die Aussage über den Wert der Messkapazität kann je nach Ausführungsbeispiel mittels verschiedener Parameter erfolgen. In einem Ausführungsbeispiel ist der Parameter ein zweiter Kapazitätswert der Messkapazität, wobei das Signal erzeugt wird, wenn eine Differenz zwischen dem ersten Kapazitätswert und dem zweiten Kapazitätswert den festgelegten Schwellenwert überschreitet. In diesem Ausführungsbeispiel liegt nach jedem weiteren Messzyklus ein absoluter Kapazitätswert vor, dessen Änderung überwacht werden kann.

In einem anderen Ausführungsbeispiel ist der absolute Kapazitätswert der Messkapazität nicht relevant. Auf dessen Berechnung kann daher verzichtet werden, wodurch sich der Rechenaufwand in einer Steuereinheit reduziert. Stattdessen wird die Änderung des Kapazitätswerts indirekt überwacht, indem lediglich eine Spannung als Parameter überwacht wird, die nach einem Ladungsausgleich an der Referenzkapazität messbar ist, während die Messkapzität dazu parallel geschaltet ist.

In einem weiteren Ausführungsbeispiel sind die Komponenten der Sensorschaltung so gewählt, dass sich nach jedem Ladevorgang an der Referenzkapazität im Wesentlichen die gleiche Spannung ergibt. Damit genügt es, dass diese Spannung nur einmal gemessen wird; auf Messungen dieser Spannung in folgenden Messzyklen kann verzichtet werden. Dadurch ergibt sich eine weitere Verringerung des Messaufwands.

Ist im vorstehend genannten Ausführungsbeispiel zudem nur eine Aussage über eine Änderung des Kapazitätswerts relevant, und nicht über dessen absoluten Wert, kann auf eine Messung der Spannung an der Referenzkapazität nach einem Ladevorgang gänzlich verzichtet werden. Anstelle eines gemessenen Spannungswertes kann dafür eine Konstante verwendet werden.

Die Geschwindigkeit dieses Verfahrens ist abhängig von Schaltern, deren Stellungen im Laufe des Verfahrens geändert werden, von der Geschwindigkeit der Be- bzw. Entladung einzelner, an diesem Verfahren beteiligter Elemente der Abisoliervorrichtung und von der Geschwindigkeit der Spannungsmessung. Die Schalter sind vorzugsweise wartungsarme Analogschalter mit geringen Schaltzeiten. Die Schalter werden von einer Steuereinheit gesteuert, u.a. so, dass alle Schalter geöffnet werden, bevor ein Schaltvorgang durchgeführt wird.

Bei einer Weiterbildung des Verfahrens wird bei Auftreten des Signales das Messer nachjustiert, wobei ein Abstand des Messers von einer Längsachse des Elektrokabels verändert wird. Durch eine Erhöhung des Abstandes des Messers von der Längsachse kann sichergestellt werden, dass das Messer den Leiter im weiteren Verlauf des Abisolierprozesses nicht beschädigt bzw. weiterhin berührt.

Bei einer Weiterbildung des Verfahrens bewirkt das Signal einen Warnton und/oder einen Stopp des Abisolierprozesses und/oder ein Ablegen des Elektrokabels in eine gesonderte Ablage und/oder einen Einbezug in eine statistische Auswertung. Je nach Interpretation des Signales sind nach Auftreten eines solchen Signals verschiedene Möglichkeiten wählbar, den Abisolierprozess des Elektrokabels weiterzuführen. Beispielsweise kann demnach die den Abisolierprozess beaufsichtigende Person auf eine notwendige Neukalibrierung der Abisoliervorrichtung aufmerksam gemacht werden. Beispielhaft kann das Signal ebenso derart gedeutet werden, dass das Elektrokabel beschädigt ist und deshalb nicht weiterverwendet werden kann.

Von Vorteil der hier beschriebenen Technologie ist auch, dass sie nicht nur in verschiedenen Kabelbearbeitungsanlagen (z.B. Kabelabläng- und Abisolieranlagen, und Anlagen mit mehreren verschiedenen Funktionen und Prozessschritten) Verwendung finden kann, sondern auch in einfachen Abisolierhandzangen.

Verschiedene Ausführungsbeispiele der verbesserten Technologie zur Detektion einer Leiterberührung sind im Folgenden anhand der beigefügten Zeichnungen detailliert beschrieben. In den Zeichnungen haben gleiche Komponenten die gleichen Bezugszeichen. Es zeigen:
- Fig. 1: eine vereinfachte schematische Darstellung einer Kabelbearbeitungsanlage mit einem Ausführungsbeispiel einer Abisoliervorrichtung mit einer Sensorschaltung,
- Fig. 2: ein vereinfachtes Schaltschema eines Ausführungsbeispiels der Sensorschaltung, und
- Fig. 3: eine vereinfachte und beispielhafte Darstellung eines Messzykluses.

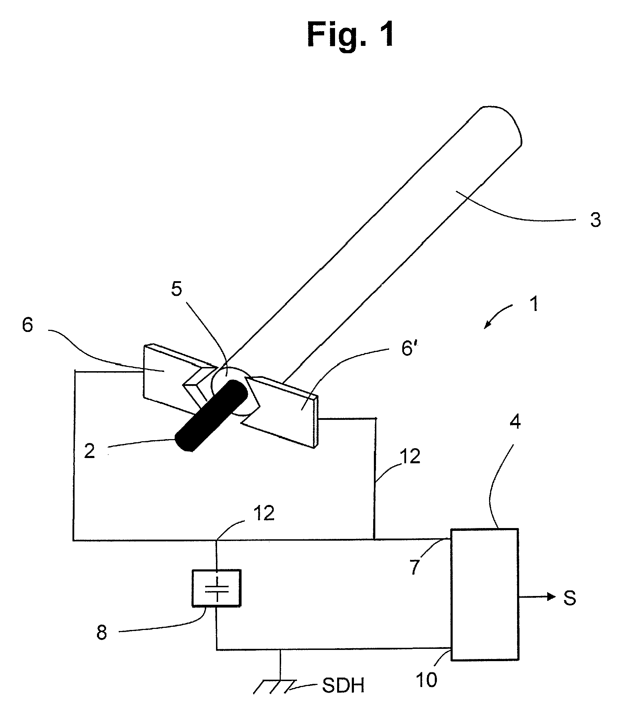

Fig. 1 zeigt eine vereinfachte schematische Darstellung einer Kabelbearbeitungsanlage mit einem Ausführungsbeispiel einer Abisoliervorrichtung 1, die eine Sensorschaltung 4 hat. Die Anlage bearbeitet ein Elektrokabel 3, das einen elektrisch leitenden (Innen) Leiter 2 und eine Isolierhülle 5 aus Kunststoff hat, die den Leiter 2 entlang seiner Länge umschliesst und elektrisch isoliert. Der Leiter 2 kann ein Draht oder eine Litze sein. Weitere Teile der Kabelbearbeitungsanlage sind der Übersichtlichkeit halber in Fig. 1 nicht gezeigt. Der Fachmann erkennt jedoch, dass ein Beispiel einer bekannten Kabelbearbeitungsanlage, z.B. eine Kappa 330 der Firma Komax AG, Schweiz, eine zentrale Steuerung, eine Bedieneinrichtung und Module für zusätzliche Funktionen wie z.B. das Ablängen hat.

Nachstehend ist eine Funktion der Abisoliervorrichtung 1 anhand eines Ausführungsbeispiels detaillierter beschrieben. Diese Funktion betrifft das Feststellen, ob eine Schneideinrichtung den Leiter 2 während des Abisolierens berührt hat, um damit die Qualität des abisolierten Leiters 2 beurteilen zu können. Wie in Fig. 1 gezeigt ist, besteht die Schneideinrichtung in einem Ausführungsbeispiel der Abisoliervorrichtung 1 aus zwei gegenüber liegend angeordneten elektrisch leitfähigen Messern 6, 6'. Eine Steuereinrichtung, die in Fig. 1 nicht gezeigt ist, steuert die Messer 6, 6', um diese zum Schliessen in Richtung des Elektrokabels 3 oder zum Öffnen von diesem weg zu bewegen. Ebenfalls nicht gezeigt sind eine Halterung für das Elektrokabel 3 und eine oder mehrere Antriebsvorrichtungen (z.B. für einen Vorschub des Elektrokabels 3), um die Messer 6, 6' und das Elektrokabel 3 relativ zueinander zu bewegen. Die Abisoliervorrichtung 1 kontrolliert durch mechanische Einwirkung die relativen Bewegungen zwischen dem Elektrokabel 3 und der Messer 6,6'.

Die in Fig. 1 gezeigte Sensorschaltung 4 ist über einen ersten Anschluss 7 mit den Messern 6, 6' und über einen zweiten Anschluss 10 mit einem definierten Potential verbunden. Die jeweiligen Verbindungen können mittels einer oder mehrerer Verbindungsleitungen 12 erfolgen. Die Verbindungsleitungen 12 sind in Fig. 1 ausserhalb der Sensorschaltung 4 angeordnet. Der Fachmann erkennt jedoch, dass die Verbindungsleitungen 12 auch der Sensorschaltung 4 zugeordnet werden können.

Das definierte Potential ist das Bezugspotential für alle Signal- und Betriebsspannungen der Abisoliervorrichtung 1 bzw. der Kabelbearbeitungsanlage. Das Bezugspotential kann 0 Volt (d.h. es besteht Erdung) oder ein anderes Potential sein. Eine allgemeine Kurzbezeichnung für dieses Bezugspotential ist SHD, das als Abkürzung für den englischen Begriff "shielding" steht. Im Folgenden ist das Bezugspotential als Bezugspotential SHD bezeichnet.

Fig. 1 zeigt zudem eine Messkapazität 8, die durch das übliche Symbol für einen Kondensator dargestellt ist. In dieser symbolhaften Darstellung besteht die Messkapazität 8 zwischen dem ersten Anschluss und dem zweiten, mit dem Bezugspotential SHD verbundenen Anschluss der Sensorschaltung 4. Diese Messkapazität 8 ist eine Ersatzschaltung für mehrere Kapazitäten und repräsentiert damit eine Summe der Kapazitäten, die als (parasitäre) Kapazitäten bezogen auf das Bezugspotential SDH bestehen, wenn die Sensorschaltung 4 mit den Messern 6, 6' verbunden ist. Die Messkapazität 8 umfasst daher die Kapazitäten, die sich vor allem aufgrund der Verbindungsleitungen 12, den Messern 6, 6' und Teilen der Sensorschaltung 4 ergeben. Die Messkapazität 8 ist in den hier beschriebenen Ausführungsbeispielen im mathematischen Sinn eine Unbekannte, die mit Hilfe von gemessenen Spannungswerten bestimmt wird.

In der Abisoliervorrichtung 1 sind die Messer 6, 6'elektrisch isoliert montiert, d.h. es besteht keine elektrische Verbindung zwischen den Messern 6, 6' und dem Bezugspotential SHD.

Kommt es zu einer Berührung der Messer 6, 6' mit dem Leiter 2 ändert sich die Messkapazität 8, da in diesem Fall die Kapazität, die zwischen dem Leiter 24 und dem Bezugspotential SHD besteht, hinzukommt. Die Sensorschaltung 4 arbeitet nach dem Prinzip des kapazitiven Ladungsausgleichs und bestimmt in einem Ausführungsbeispiel mittels Spannungsmessungen pro Messzyklus einen Wert für die Kapazität. Stellt die Sensorschaltung 4 eine Erhöhung der Kapazität fest, leitet sie daraus ab, dass mindestens eines der Messer 6, 6' den Leiter 2 berührt hat, und erzeugt ein Signal S, wie nachstehend ausführlicher beschrieben ist. Das Signal S kann mittels einer übergeordneten Steuereinheit der Abisoliervorrichtung 1 verarbeitet werden, um den weiteren Verlauf des Abisolierprozesses entsprechend zu beeinflussen.

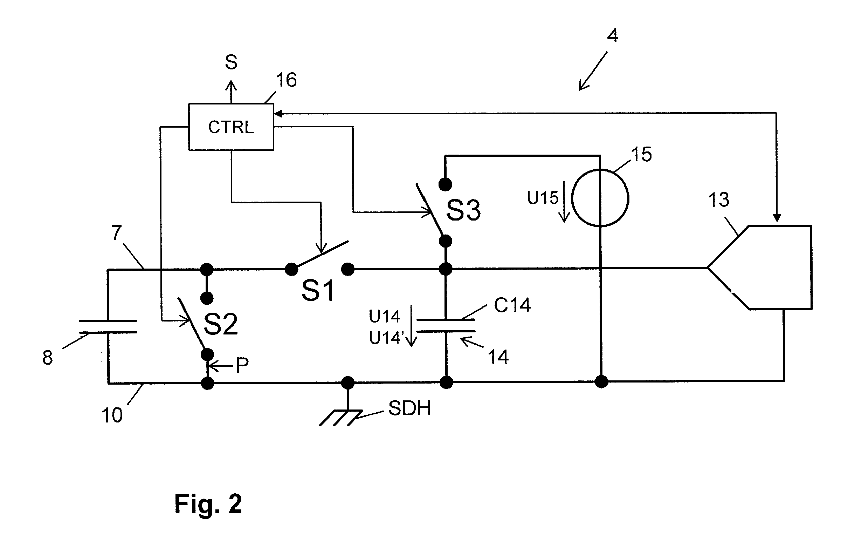

Fig. 2 zeigt ein vereinfachtes Schaltschema eines Ausführungsbeispiels der Sensorschaltung 4, die gemäss Fig. 1 mit den Messern 6, 6' verbunden ist. Die Messkapazität 8, die wie beschrieben als Ersatzschaltung die Summe mehrerer (parasitären) Kapazitäten repräsentiert, ist zum besseren Verständnis in Fig. 2 als mit der Sensorschaltung 4 verbunden gezeigt. Die Verbindung erfolgt über Anschlüsse 7, 10 der Sensorschaltung 4, wobei parasitäre Kapazitäten der Sensorschaltung 4 selbst ebenfalls zu der Messkapazität 8 gezählt werden. Die Sensorschaltung 4 hat Schalter S1, S2, S3, eine Kapazitätsschaltung 14 mit einer Referenzkapazität C14 und evtl. weiteren durch Zuleitungen verursachte parasitären Kapazitäten (im Folgenden wird nur auf die Referenzkapazität C14 Bezug genommen), einen Spannungssensor 13, eine Steuereinheit 16 und eine Spannungsquelle 15. Die Spannungsquelle 15 liefert eine Spannung U15. Die Steuereinheit 16 ist mit den Schaltern S1, S2, S3 verbunden, um diese selektiv anzusteuern, so dass die Schalter S1, S2, S3 entweder offen oder geschlossen sind. In Fig. 2 sind die Schalter S1, S2, S3 offen.

Die prinzipielle Anordnung dieser Komponenten der Sensorschaltung 4 ist wie folgt: Der Schalter S2 ist parallel zu den Anschlüssen 7, 10 geschaltet und ist somit auch parallel zur Messkapazität 8 geschaltet, wobei der Anschluss 10, ein Anschluss des Schalters S1 und ein Anschluss der Referenzkapazität C14 mit dem Bezugspotential SHD verbunden sind. Ist der Schalter S1 geschlossen, ist die Referenzkapazität C14 parallel zum Schalter S2 geschaltet; bei geöffnetem Schalter S1 ist die Referenzkapazität C14 vom Schalter S2 getrennt. Der Spannungssensor 13 ist parallel zur Referenzkapazität C14 geschaltet; bei geschlossenem Schalter S1 und offenem Schalter S2 ist der Spannungssensor 13 auch parallel zur Messkapazität 8 geschaltet. Die Spannungsquelle 15 ist bei geschlossenem Schalter S3 parallel zur Referenzkapazität C14 geschaltet und bei offenem Schalter S3 davon getrennt.

Der Spannungssensor 13 enthält in einem Ausführungsbeispiel einen Analog/Digital Wandler, der in bekannter Weise ein analoges Eingangssignal in ein digitales Ausgangssignal wandelt. In der hier beschriebenen Sensorschaltung 4 ist das analoge Eingangssignal ein analoger Spannungswert, der z.B. zu einem bestimmten Zeitpunkt am Eingang der Spannungssensors 13 anliegt. Der Spannungssensor 13 wandelt diesen analogen Spannungswert in einen digitalen Spannungswert, den die Steuereinheit 16, die mit einem Ausgang des Spannungssensors 13 verbunden ist, weiterverarbeitet. Die Steuereinheit 16 kann den Spannungssensor 13 so steuern, dass nur zu bestimmten Zeitpunkten eine Spannungswandlung durchgeführt wird. Alternativ dazu kann der Spannungssensor 13 so ausgelegt sein, dass er kontinuierlich die Eingangsspannung wandelt, die Steuereinheit 16 aber nur zu bestimmten Zeitpunkten die Ausgangsspannung "abfragt", um sie nur dann weiterzuverarbeiten.

Die Steuereinheit 16, der Spannungssensor 13 und die Schalter S1, S2, S3 sind ausgebildet, um den Geschwindigkeitsanforderungen an die Überwachung bzw. Regelung des Abisolierprozesses gerecht zu werden. In einem Ausführungsbeispiel ist in der Steuereinheit 16 festgelegt, innerhalb welcher Zeit ein Messzyklus erfolgt und wie oft dieser Messzyklus wiederholt wird. Dieser Festlegung entsprechend steuert die Steuereinheit 16 die Schalter S1, S2, S3 und den Spannungssensor 13 an. Für die Schalter S1, S2, S3 bedeutet dies z.B., dass sie schnell genug öffnen und schliessen können. In einem Ausführungsbeispiel sind die Schalter S1, S2, S3 als integrierte Schaltkreise bzw. Analogschalter (z.B. basierend auf Feldeffektransistoren) ausgeführt. Es ist jedoch auch jede andere Art von Schaltmittel verwendbar, sofern es eine elektrische Leiterverbindung entsprechend schnell öffnen und schliessen kann.

Werden integrierte Schaltkreise für die Schalter S1, S2, S3 verwendet, können bis zu 250.000 Messzyklen pro Sekunde durchgeführt werden. Diese ermöglicht ein weitaus schnelleres Detektieren bzw. Verarbeiten einer erfolgten Berührung der Messer 6, 6'mit dem Leiter 2 als dies mit dem aus DE-A-102007053825 bekannten System der Fall ist.

Fig. 2 zeigt ausserdem einen Punkt P zwischen dem Schalter S2 und dem Bezugspotential SDH. An dieser Stelle kann in einem Ausführungsbeispiel eine Spannungsquelle hinzugefügt werden, um die Messkapazität 8 bei geschlossenem Schalter S2 und offenem Schalter S1 auf ein von dieser Spannungsquelle vorgegebenes Potential vorzuladen.

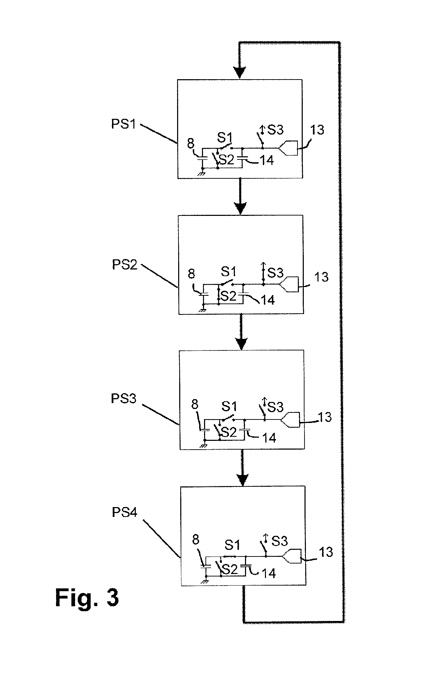

Die Funktionsweise der Sensorschaltung ist im Folgenden anhand von Fig. 2 und Fig. 3, die ein Ausführungsbeispiel eines Messzykluses mit vier Prozessschritten PS1-PS4 zeigt, beschrieben. In diesen Prozessschritten PS1-PS4 sind zur besseren Übersicht nur die Messkapazität 8 und einige der Komponenten der Sensorschaltung 4 gezeigt. Ein Messzyklus beginnt mit dem Ansetzen der Messer 6, 6' ohne dabei jedoch in die Isolierhülle 5 einzuschneiden und endet, wenn die Messer 6, 6' das Kabelende erreicht haben, vom dem das Stück Isolierhülle 5 abgezogen wird, und der Leiter 2 bloss liegt.

In den Prozessschritten PS1 und PS3 sind alle Schalter S1, S2, S3 geöffnet. Diese Prozessschritte PS1 und PS3 dienen im gezeigten Ausführungsbeispiel zur Vorbereitung auf nachfolgende Prozessschritte. Diese Schritte stellen sicher, dass sich die Schalter S1, S2, S3 jeweils in einer definierten Stellung "offen" befinden bevor weitere Schaltvorgänge ausgeführt werden. Dies verhindert, dass Kurzschlüsse auftreten. Der Fachmann erkennt jedoch, dass diese Vorbereitungsschritte auch entfallen können, wenn das Risiko von möglichen Kurzschlüssen auf andere Weise eliminiert wurde, z.B. durch präzise Synchronisierung der Schaltvorgänge oder durch definierte Wartezeiten.

Im Prozessschritt PS2 sind die Schalter S2, S3 geschlossen und der Schalter S1 ist offen. Der geschlossene Schalter S2 schliesst die Messkapazität 8 kurz, wodurch die Messkapazität 8 entladen wird; die Spannung an der Messkapazität 8 beträgt 0 Volt. Damit hat die Messkapazität 8 einen definierten Zustand (Ladung Q gleich Null, Spannung gleich 0 Volt).

Der geschlossene Schalter S3 verbindet die Spannungsquelle 15 mit der Referenzkapazität C14, wodurch die Referenzkapazität C14 geladen wird. Nach dem Laden entspricht eine Spannung U14 an der Referenzkapazität C14 der Spannung U15, die von der Spannungsquelle 15 vorgegeben ist. In einem Ausführungsbeispiel ist die vorgegebene Spannung U15 kleiner als 5 Volt. Damit hat die Referenzkapazität C14 einen definierten Zustand (Spannung U14 gleich vorgegebener Spannung U15, Ladung Q gleich dem Produkt aus Spannung U14 und Kapazität der Referenzkapazität C14).

Der Schalter S3 kann dann durch die Steuereinheit 16 geöffnet werden. Da der Schalter S1 geöffnet ist, fliesst idealerweise keine Ladung von der Referenzkapazität C14 ab und sie bleibt in ihrem definierten Zustand. Dann wird durch den Spannungssensor 13 die Spannung U14 an der Referenzkapazität C14 gemessen. Die in diesem Zustand gemessene Spannung U14 wird gespeichert, entweder im Spannungssensor 13 oder in der Steuereinheit 16.

Nachdem im Prozessschritt PS3 wieder alle Schalter S1, S2, S3 geöffnet wurden, wird im Prozessschritt PS4 nur der Schalter S1 durch die Steuereinheit 16 geschlossen. Dadurch sind die Messkapazität 8 und die Referenzkapazität C14 parallel geschaltet. Dadurch fliesst Ladung von der Referenzkapazität C14 zur Messkapazität 8 bis sich die Ladungen auf beiden Kapazitäten ausgeglichen haben. Ein solcher Ladungsausgleich hat einen exponentiellen Verlauf, der von den beteiligten Kapazitäten und einem Serienwiderstand (z.B. Leitungswiderstand) abhängt; er kann beispielsweise nach einigen Nanosekunden als abgeschlossen gelten. Eine Folge dieses Ladungsausgleichs ist, dass die Spannung an der Parallelschaltung aus der Messkapazität 8 und der Referenzkapazität C14 sinkt. Nach abgeschlossenem Ladungsausgleich wird durch den Spannungssensor 13 eine reduzierte Spannung U14' gemessen. Die in diesem Zustand gemessene Spannung U14' kann von der Steuereinheit 16 mit der gespeicherten Spannung U14 aus dem Prozessschritt PS2 verarbeitet werden.

Die Verarbeitung kann in einem Ausführungsbeispiel darin bestehen, dass die Steuereinheit 16 in jedem Messzyklus einen tatsächlichen Wert C8 der Messkapazität 8 bestimmt. Dieser Wert ergibt sich aus: C8 = C14 * (U14/U14' - 1).

Wird der Wert C8 der Messkapazität 8 in jedem Messzyklus bestimmt, kann nach jedem Messzyklus festgestellt werden, ob sich der Wert C8 der Messkapazität 8 verändert hat. Da der Wert C8 der Messkapazität 8 während dem Abisolierprozess sehr oft bestimmt werden kann, kann eine grosse Auflösung entlang des abisolierten Leiters 2 erreicht werden.

Um ein Mass dafür zu bekommen, ob der Wert C8 der Messkapazität 8 während dem Abisolierprozess zunimmt, wird der Wert C8 der Messkapazität 8 am Anfang eines jeden Abisolierprozesses bei geöffneten Messern 6, 6', kurz vor dem Einschneiden der Isolierhülle 5, bestimmt. Dieser (erste) Wert C8 der Messkapazität 8 stellt einen Referenzwert dar und bedeutet "Leiter nicht berührt". In einem Ausführungsbeispiel speichert die Steuereinheit 16 den Referenzwert.

Danach werden die Messer 6, 6' geschlossen und scheiden in die Isolierhülle 5 ein, und es wird in einem weiteren Messzyklus, in dem erneut ein Ladungsausgleich zwischen der Messkapazität 8 und der Referenzkapazität C14 durchgeführt wird, ein Parameter bestimmt, der bezogen auf den ersten Kapazitätswert eine Änderung des Kapazitätswerts der Messkapazität 8 nach dem Einschneiden in das Elektrokabel 3 anzeigt. In einem Ausführungsbeispiel wird in einem weiteren Messzyklus der Wert C8 der Messkapazität 8 erneut bestimmt.

Auch wenn die Messer 6, 6' den Leiter 2 nicht berühren, ändert sich der Wert C8 der Messkapazität 8 aufgrund sich ändernder Geometrien während die Messer 6, 6' durch die Isolierhülle 5 schneiden. Diese Änderung ist bei geeigneter Auslegung jedoch nicht so stark wie es bei einer Berührung des Leiters 2 der Fall wäre. Um eine solche Änderung des Werts C8 der Messkapazität 8 nicht fälschlicherweise als eine Leiterberührung zu werten, ist ein Kapazitätsschwellenwert festgelegt und in der Steuereinheit 16 gespeichert. Überschreitet eine Differenz aus dem Referenzwert und einem in einem Messzyklus bestimmten Wert C8 der Messkapazität 8 den festgelegten Kapazitätsschwellenwert, bedeutet dies "Leiter berührt" und die Steuereinheit 16 erzeugt das Signal S.

In einem Ausführungsbeispiel kann eine Repetitionsgenauigkeit der ersten Spannung U14 festgelegte Genauigkeitsanforderungen erfüllen. Das heisst, wird die Referenzkapazität C14 wiederholt entladen und durch die Spannungsquelle 15 geladen, hat die nach jedem Ladevorgang anliegende erste Spannung U14 im Wesentlichen den gleichen Spannungswert. In einem solchen Ausführungsbeispiel kann auf eine Messung der ersten Spannung U14 pro Messzyklus verzichtet werden. Die erste Spannung U14 wird in diesem Fall nur einmal gemessen und der ermittelte Spannungswert wird für alle folgenden Messzyklen wieder verwendet.

In den hier beschriebenen Ausführungsbeispielen sind hauptsächlich die Änderungen des Werts C8 der Messkapazität 8 für die Auswertung von Interesse; ein Absolutwert des Wert C8 der Messkapazität 8 kann somit je nach Ausführungsbeispiel unrelevant sein. Bei genügender Repetitionsgenauigkeit der ersten Spannung U14 kann in solchen Anwendungsbeispielen gänzlich auf die Bestimmung der ersten Spannung U14 verzichtet werden und stattdessen eine fixe Konstante eingesetzt werden.

Ist in einem weiteren Ausführungsbeispiel der Absolutwert des Werts C8 der Kapazität 8 unrelevant, so kann dessen Änderung indirekt überwacht werden, indem lediglich die zweite Spannung U14' überwacht wird. Die Spannung U14' dient als Parameter, um bezogen auf den ersten Kapazitätswert eine Änderung des Kapazitätswerts C8 der Messkapazität 8 nach dem Einschneiden in das Elektrokabel 3 anzuzeigen. Der Kapazitätswert selbst wird in diesem Fall nicht berechnet. Das Signal S wird erzeugt, wenn eine Differenz zwischen dem zweiten Spannungswert des ersten Messzykluses und dem zweiten Spannungswert des weiteren Messzykluses einen festgelegten Spannungsschwellenwert überschreitet.

Eine übergeordnete Steuereinheit der Kabelbearbeitungsanlage empfängt das Signal S und löst eine für qualitativ ungenügend produzierte Elektrokabel übliche Prozedur aus. Diese Prozedur kann das Ausgeben eines Warntones, das Stoppen der Produktion oder das Aussortieren solcher Elektrokabel als Ausschuss umfassen. Zudem kann das Signal S zur Nachjustierung eines Abstandes der Messers 6, 6' von einer Längsachse des abzuisolierenden Elektrokabels 3 verwendet werden.

## Patentansprüche

1. Verfahren zum Detektieren einer Berührung eines Leiters (2) eines Elektrokabels (3) durch ein elektrisch leitfähiges Messer (6, 6') während eines Abisolierprozesses in einer Abisoliervorrichtung (1) einer Kabelbearbeitungsanlage, wobei eine Sensorschaltung (4) über einen Anschluss (7, 10) mit dem Messer (6, 6') verbunden ist, so dass sich eine Messkapazität (8) ausbildet, wobei das Verfahren folgende Schritte aufweist:
vor einem Einschneiden in das Elektrokabel (3), Bestimmen eines ersten Kapazitätswerts (C8) der Messkapazität (8) während eines ersten Messzykluses, in dem ein Ladungsausgleich zwischen der Messkapazität (8) und einer Referenzkapazität (C14) der Sensorschaltung (4) durchgeführt wird,
Bestimmen eines Parameters in einem weiteren Messzyklus, in dem erneut ein Ladungsausgleich zwischen der Messkapazität (8) und der Referenzkapazität (C14) durchgeführt wird, wobei der Parameter bezogen auf den ersten Kapazitätswert (C8) eine Änderung eines Kapazitätswerts (C8) der Messkapazität (8) nach dem Einschneiden in das Elektrokabel (3) anzeigt, und
Erzeugen eines Signals (S), wenn die Änderung grösser als ein festgelegter Schwellenwert ist, wobei das Signal (S) eine Berührung des Leiters (2) anzeigt.

2. Verfahren nach Anspruch 1, wobei während dem Abisolierprozess eine festgelegte Anzahl von weiteren Messzyklen durchgeführt wird.

3. Verfahren nach einem der vorhergehenden Ansprüche, wobei ein erster Messzyklus folgende Schritte aufweist:
Herstellen eines definierten Spannungszustandes an der Messkapazität (C8),
Laden der Referenzkapazität (C14), so dass an der Kapazitätsschaltung (14) eine erste Spannung mit einem ersten Spannungswert (U14) anliegt,
Herstellen einer elektrischen Verbindung zwischen der Messkapazität (8) und der Referenzkapazität (C14), um einen Ladungsausgleich zwischen der Messkapazität (8) und der Referenzkapazität (C14) zu ermöglichen,
Messen einer zweiten Spannung (U14'), die nach dem Ladungsausgleich an der Referenzkapazität (C14) anliegt und die einen zweiten Spannungswert hat, und
Bestimmen des ersten Kapazitätswertes (C8) der Messkapazität (8) mittels der Spannungswerte und der Referenzkapazität (C14).

4. Verfahren nach Anspruch 3, wobei ein weiterer Messzyklus folgende Schritte aufweist:
Herstellen des definierten Spannungszustandes an der Messkapazität (C8),
Laden der Referenzkapazität (C14), so dass an der Kapazitätsschaltung (14) die erste Spannung anliegt,
Herstellen der elektrischen Verbindung zwischen der Messkapazität (8) und der Referenzkapazität (C14), um einen Ladungsausgleich zwischen der Messkapazität (8) und der Referenzkapazität (C14) zu ermöglichen,
Messen der zweiten Spannung (U14'), die nach dem Ladungsausgleich an der Referenzkapazität (C14) anliegt und einen zweiten Spannungswert hat, und
Bestimmen des Parameters.

5. Verfahren nach Anspruch 4, wobei der erste Spannungswert (U14) im ersten Messzyklus gemessen wird und in einem weiteren Messzyklus verwendet wird.

6. Verfahren nach Anspruch 4, wobei der erste Spannungswert (U14) einen im Wesentlichen konstanten Wert hat.

7. Verfahren nach einem der vorhergehenden Ansprüche, wobei der Parameter ein zweiter Kapazitätswert (C8) der Messkapazität (8) ist, wobei das Signal (S) erzeugt wird, wenn eine Differenz zwischen dem ersten Kapazitätswert und dem zweiten Kapazitätswert einen festgelegten Kapazitätsschwellenwert überschreitet.

8. Verfahren nach einem der Ansprüche 3 - 6, wobei der Parameter der zweite Spannungswert ist, wobei das Signal (S) erzeugt wird, wenn eine Differenz zwischen dem zweiten Spannungswert des ersten Messzykluses und dem zweiten Spannungswert des weiteren Messzykluses einen festgelegten Spannungsschwellenwert überschreitet.

9. Verfahren nach einem der Ansprüche 3 - 8, wobei das Herstellen des definierten Spannungszustandes ein Kurzschliessen der Messkapazität (8) umfasst.

10. Verfahren nach einem der Ansprüche 3 - 8, wobei das Herstellen des definierten Spannungszustandes ein Koppeln eines definierten Spannungspotentials an die Messkapazität (8) umfasst.

11. Verfahren nach einem der Ansprüche 3 - 10, wobei das Herstellen des definierten Spannungszustandes ein Schliessen eines ersten Schalters (S2) umfasst, während ein zweiter Schalter (S1) die Referenzkapazität (C14) von der Messkapazität (8) trennt.

12. Verfahren nach Anspruch 11, wobei das Laden der Referenzkapazität (C14) ein Schliessen eines dritten Schalters (S3) umfasst, während der zweite Schalter (S1) geöffnet ist.

13. Verfahren nach Anspruch 12, wobei das Herstellen der elektrischen Verbindung ein Schliessen des zweiten Schalters (S1), ein Öffnen des ersten Schalters (S2) und eine Öffnen des dritten Schalters (S3) umfasst.

14. Verfahren nach einem der Ansprüche 11 - 13, wobei alle Schalter (S1, S2, S3) geöffnet werden, bevor ein Schaltvorgang durchgeführt wird.

15. Verfahren nach einem der vorangegangenen Ansprüche, wobei bei Auftreten des Signales (S) das Messer (6) nachjustiert wird, wobei ein Abstand des Messers (6) zu einem den Leiter (2) enthaltenden Elektrokabels (3) verändert wird.

16. Verfahren nach einem der vorangegangenen Ansprüche, wobei das Signal (S) einen Warnton und/oder einen Stopp des Abisolierprozesses und/oder ein Ablegen des Elektrokabels (20) in eine gesonderte Ablage bewirkt und/oder zur statistischen Analyse verwendet wird.

17. Kabelbearbeitungsanlage mit einer Abisoliervorrichtung zur Durchführung des Verfahrens zum Detektieren einer Leiterberührung durch ein elektrisch leitfähiges Messer (6, 6') bei einem Abisolierprozess nach einem der Ansprüche 1 bis 16.
